# EUROPEAN PATENT APPLICATION

(11) **EP 1 889 767 A1**
(43) Date of publication of application: **20.02.2008**
(21) Application number: 06756567.1
(22) Date of filing: 18.05.2006
(51) Int. Cl.: B60T 11/16

(54) **MASTER CYLINDER**

(30) Priority: 27.05.2005 JP 2005155432
(71) Applicant: Bosch Corporation, Shibuya-ku Tokyo 150-8360 (JP)
(72) Inventor: TAIRA, Kazuhisa, C/O BOSCH CORPORATION,, Higashimatsuyama-Shi, Saitama 355-8602 (JP)
(74) Representative: Knapp, Thomas
(86) International application number: PCT/JP2006/310407
(87) International publication number: WO 2006/126619

(57) **Abstract**

A master cylinder according to the invention has a predetermined number of second axial grooves (24) formed on an outer peripheral surface of a tip portion of a secondary piston (9) at predetermined intervals apart in a circumferential direction. Second radial holes (25) are formed at the rear ends of some of the second axial grooves (24) in such a manner as to penetrate between the inner and outer peripheral surfaces of the piston (9). In an inoperative state, the rear ends of the second axial grooves (24) and the second radial holes (25) are all located to the rear of a seal point A of a second cup seal (17), and a second fluid supply chamber (21) is connected to a second hydraulic pressure chamber (15) via the second axial grooves (24) and the second radial holes (25). Furthermore, when the rear ends of the second axial grooves (24) and the second radial holes (25) are all moved in front of the seal point A, the second fluid supply chamber (21) is disconnected from the second hydraulic pressure chamber (15). Consequently, brake fluid supply performance is ensured and the processing of the piston is simplified as well as piston strength being ensured.

## Description

### Background Art

The present invention relates to the technical field of a master cylinder which is used for a brake system of a vehicle such as an automobile and generates a master cylinder pressure to operate a brake. In particular, the invention relates to the technical field of a master cylinder that takes into account supply performance and self-support performance. The supply performance is the performance of supplying brake fluid to a hydraulic pressure chamber from a reservoir at the time of brake release and the self-support performance is the performance of drawing the brake fluid toward the hydraulic pressure chamber side of the master cylinder by driving an external power source such as a pump when the brake is operated, such as automatic braking, regardless of brake operation by a driver.

For example, an automotive brake system is known that is provided with a master cylinder which is operated by depression of a brake pedal and generates a master cylinder pressure which is supplied to a wheel cylinder of a wheel to operate the brake.

This type of known master cylinder has a dead stroke of a piston from the start of piston movement during brake operation until a fluid passage formed in the piston and connecting a reservoir and a hydraulic pressure chamber is blocked by a cup seal, by which a master cylinder pressure is generated in the hydraulic pressure chamber. Since it is desirable to shorten the dead stroke as much as possible, it is necessary to reduce the amount of piston movement until the fluid passage of the piston is blocked by the cup seal. To achieve this, one conceivable idea is to reduce the passage area, regulated by the cup seal, of the fluid passage of the piston when the master cylinder is in an inoperative state. Nevertheless, simply reducing the passage area deteriorates the supply performance of supplying brake fluid to the hydraulic pressure chamber from the reservoir at the time of brake release.

Furthermore, a brake system having the aforementioned master cylinder may be provided with an automatic brake system or a traction control system. In such a brake system, when a predetermined automatic braking condition is established, a pump of the automatic brake system is driven and sucks up the brake fluid from the reservoir of the master cylinder to supply the fluid to a wheel cylinder for operation of the automatic brake. Alternatively, when a drive wheel slips (runs idle), a pump of the traction control system is driven and likewise sucks up the brake fluid from the reservoir of the master cylinder to supply the fluid to a wheel cylinder of the drive wheel to apply the brake to the drive wheel, thereby resolving the wheel slip.

In the consideration of the aforementioned difficulties, JP-A-2000-108878 proposes a master cylinder that ensures, without lengthening the dead stroke, brake fluid supply performance and self-support performance by facilitating flow of brake fluid from the reservoir into the hydraulic pressure chamber when the brake is released and when the brake fluid in the reservoir is drawn by the pump.

According to the master cylinder disclosed in JP-A-2000-108878, a piston formed in a cylindrical shape having a bottom face is slidably fitted in a cylinder hole in an axial direction of the cylinder, and a hydraulic pressure chamber is formed in front of a piston front end in the cylinder hole. In addition, a fluid supply chamber which is constantly connected with the reservoir is formed between an inner peripheral surface of the cylinder hole and an outer peripheral surface of the piston. Furthermore, the cylinder is provided with a cup seal that prevents flow of fluid at least from the hydraulic pressure chamber toward the fluid supply chamber by sealing in a liquid-tight manner between the inner peripheral surface of the cylinder hole and the outer peripheral surface of the piston. Moreover, a predetermined number of relief ports formed by radial holes connecting the inner and outer peripheral surfaces of the cylindrical portion of the piston are provided in the piston at predetermined intervals as appropriate in a circumferential direction. Additionally, an annular piston angled face with which the cup seal comes into contact when the piston moves forward (i.e. a face angled such that the diameter increases towards the rear) is provided to the rear side of the openings of the relief ports in the outer peripheral surface of the piston. Furthermore, when the piston is in an inoperative state, the cup seal separates from the piston angled face, thereby connecting the hydraulic pressure chamber and the fluid supply chamber via the relief ports and a gap between the cup seal and the piston angled face. On the other hand, when the piston moves forward, the piston angled face comes into contact with the cup seal, thereby blocking the connection between the hydraulic pressure chamber and the fluid supply chamber.

Further, the connection between the hydraulic pressure chamber and the fluid supply chamber is blocked by immediate contact of the piston angled face with the cup seal when the piston moves forward. When the piston angled face separates from the cup seal as the piston is retracted, the passage area of the radial holes formed in the piston increases. Accordingly, the dead stroke is shortened and the brake fluid supply performance at the time of brake release is also ensured.

In addition, when the brake fluid is drawn by a pump due to the automatic brake operation or the traction control brake operation when the piston is in the inoperative state, the brake fluid in the reservoir is drawn into the hydraulic pressure chamber through the fluid supply chamber, a gap between the cup seal and the piston angled face, and the relief ports, and the brake fluid in the hydraulic pressure chamber is then fed to a wheel cylinder. In this manner, the brake fluid self-support performance is ensured.

Furthermore, as another example of this type of master cylinder, a master cylinder disclosed in JP-A-2000-142364 is known, which ensures the supply performance of supplying brake fluid into the hydraulic pressure chamber from the reservoir at the time of brake release while shortening the dead stroke of the piston.

According to the master cylinder disclosed in JP-A-2000-142364, a front end of the piston is formed with a smaller diameter than the rear portion side such that the piston outer peripheral surface is provided with an annular stepped portion. Additionally, a sleeve, which has a predetermined number of axial grooves on an inner peripheral surface and which has, at a rear end, the same predetermined number of radial grooves each of which is connected to the respective axial grooves, is fitted to the front end of the smaller diameter of the piston in the axial direction and is in contact with the stepped portion. The sleeve is also retained by a retainer in the axial direction. Furthermore, the cylinder is provided with a cup seal which prevents the flow of fluid at least from the hydraulic pressure chamber toward the reservoir by sealing in a liquid-tight manner between the inner peripheral surface of the cylinder hole and the outer peripheral surface of the sleeve and the outer peripheral surface of the piston.

In the piston inoperative state, the radial grooves are positioned to the rear side of the cup seal, thereby connecting the hydraulic pressure chamber and the reservoir via the radial grooves and the axial grooves. In addition, when the piston moves forward, the radial grooves are positioned in front of the cup seal and the cup seal seals in a liquid-tight manner between the inner peripheral surface of the cylinder hole and the outer peripheral surface of the piston. As a result, the connection between the hydraulic pressure chamber and the reservoir is blocked. Also, according to the master cylinder disclosed in JP-A-2000-142364, a relatively large passage area can be ensured as a result of the radial grooves and axial grooves, and therefore the dead stroke can be shortened while ensuring the brake fluid supply performance at the time of brake release.

However, in the master cylinder disclosed in JP-A-2000-108878, even though the brake fluid supply performance and self-support performance can be ensured to a reasonable extent, the diameter of a portion of the piston, which is in front of a cup-seal contact face and is in front of a piston angled face is large and a front portion thereof is guided into an axial hole of the cylinder. Therefore, the passage area for brake fluid is set by a radial hole, and thus a large sized passage area for brake fluid cannot be ensured. This makes it impossible to ensure sufficient brake fluid self-support performance, and may also cause problems related to piston processing and productivity.

Moreover, the predetermined number of the radial holes that form the relief ports are formed along the circumferential direction of the piston. Nevertheless, since the passage area for brake fluid needs to be ensured to a reasonable extent, a relatively large number of the radial holes must be provided or the diameters of the radial holes must be large, which may lead to problems related to degradation of the piston strength.

In response to such problems, JP-A-2000-108878 proposes reducing the diameter of a portion of the piston, which is in front of the piston angled face, and setting the passage area for brake fluid by a gap between the outer peripheral surface of the small diameter portion and the inner peripheral surface of the cylinder hole as well. However, in the case the diameter of the front portion of the piston is reduced as described above, the front portion of the piston is not guided into the axial hole of the cylinder, thereby causing degradation of the piston guide performance.

Likewise, in the master cylinder disclosed in JP-A-2000-142364, the brake fluid supply performance can be ensured because the passage area for brake fluid can be ensured sufficiently. Nevertheless, the sleeve must be fitted to the front end of the piston and the fitted sleeve must be retained in the axial direction by the retainer. Consequently, not only the number of parts increases but also the piston is difficult to assemble.

### Disclosure of the Invention

It is an object of the present invention to provide a master cylinder which ensures brake fluid supply performance and self-support performance, allows simplification of piston processing, ensures sufficient piston strength, improves piston guide performance, and allows the piston to be assembled more easily by reducing the number of parts.

To achieve these objects, a master cylinder according to the invention includes at least a cylinder housing, a piston which is fitted slidably in a cylinder hole of the cylinder housing and moves forward by input, a hydraulic pressure chamber formed between the cylinder housing and a front end of the piston in the cylinder hole, a fluid passage which is provided in the piston and connects the hydraulic pressure chamber and a reservoir that stores brake fluid, a seal member which is provided in the cylinder housing and opens the fluid passage when the piston is in an inoperative state and blocks the fluid passage when the piston moves forward. The master cylinder according to the invention is characterized in that the fluid passage includes a predetermined number of axial grooves formed on an outer peripheral surface of the front end of the piston along a circumferential direction so as to be constantly connected to the hydraulic pressure chamber, and a predetermined number of radial holes formed at positions of desire on the axial grooves so as to be constantly connected to the hydraulic pressure chamber.

Furthermore, the master cylinder of the invention is characterized in that the positions of desire are rear ends of the axial grooves.

Moreover, the master cylinder of the invention is characterized in that the number of the radial holes is equal to or smaller than the number of the axial grooves.

According to the master cylinder of the invention as structured above, the fluid passage connecting the hydraulic pressure chamber and the reservoir is formed by the predetermined number of axial grooves and the predetermined number of radial holes formed on the outer peripheral surface of the front end of the piston. Therefore, a passage area for brake fluid can be set large enough when the master cylinder is in the inoperative state. Consequently, the fluid supply performance and the fluid self-support performance of the master cylinder can be well ensured, and brake operations by a pump, other than those related to the operation of the master cylinder, can be reliably carried out.

Moreover, since the passage area for brake fluid can be set large enough by the axial grooves and the radial holes, the diameters of the radial holes can be reduced, thereby enabling shortening of the dead stroke by a corresponding amount.

Furthermore, the axial grooves and the radial holes are respectively formed at the front end of the piston, but since the passage area for brake fluid can be ensured to a reasonable extent by the axial grooves, the passage area for brake fluid ensured by the radial holes can be reduced. Accordingly, the number of the radial holes can be smaller than that of the axial grooves, or the diameters of the radial holes can be reduced as described above. Therefore, even if the predetermined number of the radial holes are provided, the piston strength can be ensured sufficiently. Furthermore, by making the number of the radial holes the same as that of the axial grooves, the piston strength can be ensured to a reasonable extent and even better fluid supply performance and fluid self-support performance of the master cylinder can be ensured.

In addition, since the axial grooves and the radial holes are simply formed on the front end of the piston, the processing of the piston is easy, thus removing the need for troublesome processing, and other special parts are not required, thus reducing the number of parts compared to the known structures. As a result, the piston can be assembled more easily.

### Brief Description of the Drawings

Fig. 1 is a longitudinal sectional view illustrating an example of an embodiment of a master cylinder according to the invention.
Fig. 2 is a partial expanded view of a portion II in FIG. 1.
Fig. 3 illustrates a secondary piston of the master cylinder according to the example shown in Fig. 1, wherein (a) is a front elevational view and (b) is a sectional view taken along line IIIB-IIIB in (a).

### Best Mode for Carrying Out the Invention

Hereafter, a best mode for carrying out the invention is described with reference to the attached drawings. Note that "front" and "rear" as referred in the description below refer, respectively, to the direction in which a piston moves when a master cylinder is operated and a direction in which the piston retracts when the operation of master cylinder is released. In the drawings referred to in each description, the "front" and the "rear" correspond to "left" and "right", respectively.

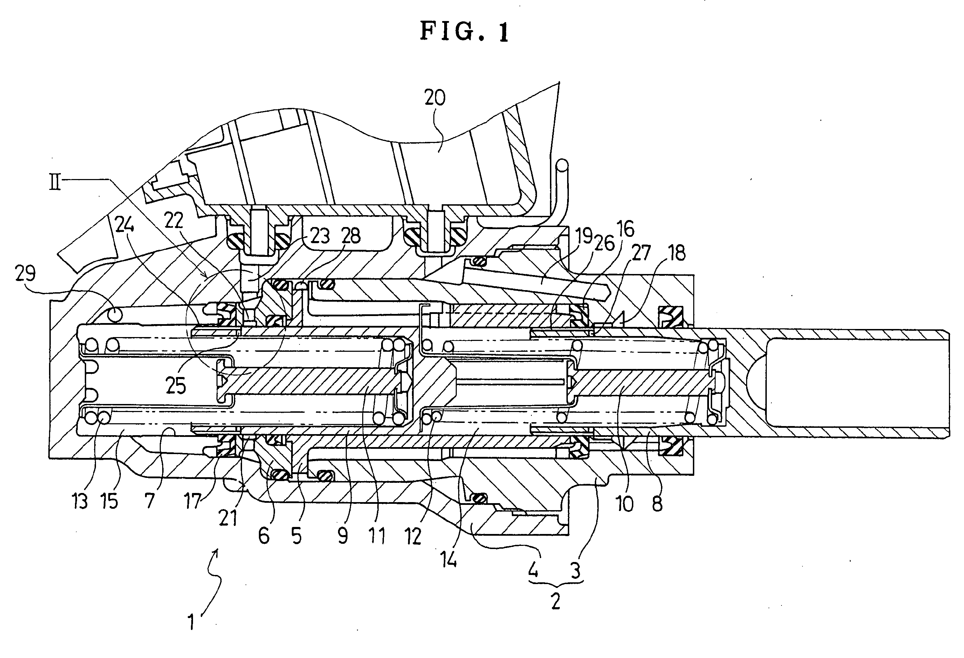

Fig. 1 is a longitudinal sectional view of an example of an embodiment of the master cylinder according to the invention.

As shown in Fig. 1, a master cylinder 1 of the example includes a cylinder housing 2 which includes a first cylinder member 3 and a second cylinder member 4 to which the first cylinder member 3 is fitted and secured. Furthermore, a first piston guide 5 and a second piston guide 6 are held between the first cylinder member 3 and the second cylinder member 4 in an axial direction.

In addition, a cylinder hole 7 extending in the axial direction is formed within the cylinder housing 2 by the first and second cylinder members 3 and 4 and the first and second piston guides 5 and 6.

In the cylinder hole 7, a primary piston 8 is fitted slidably in a liquid-tight manner within the first cylinder member 3 and the first piston guide 5, and a secondary piston 9 is fitted slidably in a liquid-tight manner within the second cylinder member 4 and the first and second piston guides 5 and 6. First interval regulation means 10 for regulating a maximum interval between the primary piston 8 and the secondary piston 9 is provided between the primary piston 8 and the secondary piston 9, and second interval regulation means 11 for regulating a maximum interval between the first cylinder member 3 and the secondary piston 9 is provided between the first cylinder member 3 and the secondary piston 9.

A first return spring 12 is disposed in a compressed manner between the primary piston 8 and the secondary piston 9 in the cylinder hole 7, and an initialization load of the first return spring 12 is determined by the first interval regulation means 10. Furthermore, a second return spring 13 is provided in a compressed manner between the first cylinder member 3 and the secondary piston 9 in the cylinder hole 7, and the initialization load of the second return spring 13 is determined by the second interval regulation means 11.

The primary piston 8 is constantly urged in an inoperative direction (a direction away from the secondary piston 9) by an urging force of the first return spring 12, and the secondary piston 9 is constantly urged in an inoperative direction (a direction toward the primary piston 8) by an urging force of the second return spring 13. When the master cylinder 1 is in an inoperative state, both the primary piston 8 and the secondary piston 9 are held at inoperative positions shown in Fig. 1. In this case, an interval between the primary piston 8 and the secondary piston 9 is regulated to the maximum interval by the first interval regulation means 10, and a interval between the second cylinder member 4 and the secondary piston 9 is regulated to the maximum interval by the second interval regulation means 11.

In the cylinder hole 7, a first hydraulic pressure chamber 14 is formed between the primary piston 8 and the secondary piston 9, and a second hydraulic pressure chamber 15 is formed between the second cylinder member 4 and the secondary piston 9. A first cup seal 16 is provided between the first cylinder member 3 and the first piston guide 5, and seals in a liquid-tight manner between an outer peripheral surface of the primary piston 8 and an inner peripheral surface of the cylinder hole 7, thereby defining the first hydraulic pressure chamber 14. Furthermore, a second cup seal 17 is provided between the second cylinder member 4 and the second piston guide 6, and seals in a liquid-tight manner between an outer peripheral surface of the secondary piston 9 and the inner peripheral surface of the cylinder hole 7, thereby defining the second hydraulic pressure chamber 15.

The first cylinder member 3 has a first fluid supply chamber 18 that is formed in an annular shape and provided between the first cylinder member 3 and the outer peripheral surface of the primary piston 8. The first fluid supply chamber 18 is constantly connected to a reservoir 20 via a fluid passage 19 provided in the first cylinder member 3. Therefore, when a specified amount of brake fluid or more is stored in the reservoir 20, the first fluid supply chamber 18 is constantly supplied with the brake fluid. In addition, the second piston guide 6 has a second fluid supply chamber 21 that is formed in an annular shape and provided between the second piston guide 6 and the outer peripheral surface of the secondary piston 9. The second fluid supply chamber 21 is constantly connected to the reservoir 20 via a fluid passage 22 provided on the second piston guide 6 and a fluid passage 23 provided in the second cylinder member 4. Accordingly, in a similar manner to described above, the second fluid supply chamber 21 is constantly supplied with the brake fluid.

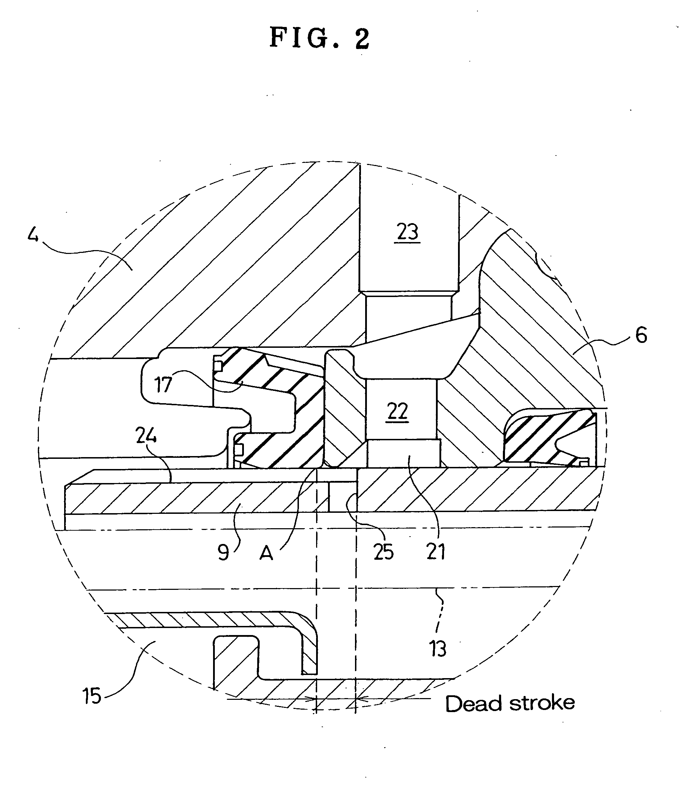

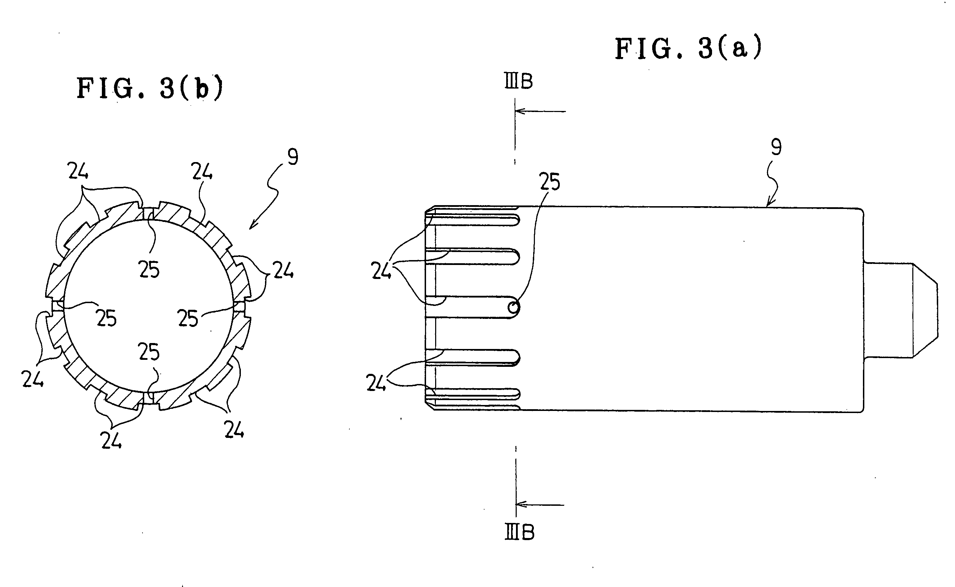

As illustrated in detail in Fig. 2 and Fig. 3(a) and (b), an outer peripheral surface of a tip portion of the secondary piston 9 is provided with a predetermined number (12 in the example in the drawing) of second axial grooves 24 formed at predetermined intervals in a circumferential direction in such a manner as to be constantly connected to the second hydraulic pressure chamber 15. Moreover, some (four grooves arranged at equal intervals in the circumferential direction in the drawing) of the second axial grooves 24 are respectively provided with, at the rear ends thereof, second radial holes 25 in such a manner as to penetrate between the inner and outer peripheral surfaces of the secondary piston 9 and be constantly connected to the second hydraulic pressure chamber 15. Note that the number of the second radial holes 25 is set smaller than that of the second axial grooves 24, but the number of the second radial holes 25 may be the same as that of the second axial grooves 24 by providing the second radial holes 25 for all of the second axial grooves 24.

Furthermore, at a retracted limit position (that is, the inoperative position) of the secondary piston 9 shown in Figs. 1 and 2, the rear ends of the second axial grooves 24 and the second radial holes 25 are all located to the rear of the second cup seal 17, and the second fluid supply chamber 21 is connected to the second hydraulic pressure chamber 15 via the second axial grooves 24 and the second radial holes 25. In this case, a predetermined passage area is ensured by the second axial grooves 24 and the second radial holes 25. In addition, when the secondary piston 9 moves forward from the retracted limit position and the rear ends of the second axial grooves 24 and the second radial holes 25 are all moved in front of a seal point A (shown in Fig. 2: a seal position in contact with the outer peripheral surface of the secondary piston 9) of the second cup seal 17, the second fluid supply chamber 21 is disconnected from the second hydraulic pressure chamber 15.

Likewise, as shown in Fig. 1, first axial grooves 26 formed with the same shape as the second axial grooves 24 are provided on an outer peripheral surface of a tip portion of the primary piston 8 in such a manner as to be constantly connected to the first hydraulic pressure chamber 14. In addition, some of the first axial grooves 26 are respectively provided with, at the rear ends thereof, first radial holes 27 formed in the same shape as the second radial holes 25 in such a manner as to penetrate between the inner and outer peripheral surfaces of the primary piston 8 and be constantly connected to the first hydraulic pressure chamber 14.

Likewise, at a retracted limit position of the primary piston 8 shown in Fig. 1, the rear ends of the first axial grooves 26 and the first radial holes 27 are located to the rear of the first cup seal 25, and the first fluid supply chamber 18 is connected to the first hydraulic pressure chamber 14 via the first axial grooves 16 and the first radial holes 27. In this case, a predetermined passage area is ensured by the first axial grooves 26 and the first radial holes 27. In addition, when the primary piston 8 moves forward from the retracted limit position and the rear ends of the first axial grooves 26 and the first radial holes 27 are all moved in front of a seal point (a seal point corresponding to the seal point A of the second cup seal 17 shown in Fig. 2) of the first cup seal 16, the first fluid supply chamber 18 is disconnected from the first hydraulic pressure chamber 14.

The first hydraulic pressure chamber 14 is connected with a wheel cylinder of a first brake system via a first output port 28 provided on the first cylinder member 3, and the second hydraulic pressure chamber 15 is connected with a wheel cylinder of a second brake system via a second output port 29 provided on the second cylinder member 4. Furthermore, as in known structures, the first and second brake systems are respectively provided with a pump, not shown, that draws the brake fluid from the reservoir 20 through the first and second hydraulic pressure chambers 14 and 15, respectively, and supplies the brake fluid to the corresponding wheel cylinders.

Next, a description will be given of the operation of the master cylinder 1 of the example described above.

As shown in Fig. 1, when the master cylinder 1 is in the inoperative state, the primary piston 8 and the secondary piston 9 are at the retracted limits or the inoperative positions, respectively. The first fluid supply chamber 18 is connected to the first hydraulic pressure chamber 14 via the first axial grooves 26 and the first radial holes 27, and the second fluid supply chamber 21 is connected to the second hydraulic pressure chamber 15 via the second axial grooves 24 and the second radial holes 25. Accordingly, the first and second hydraulic pressure chambers 14 and 15 are both connected to the reservoir 20, and no hydraulic pressure is generated in the hydraulic pressure chambers 14 and 15.

When a brake operation such as depressing a brake pedal, not shown, is carried out in the inoperative state of the master cylinder 1, the primary piston 8 moves forward while compressing both the first interval regulation means 10 and the first return spring 12. Then, when the rear ends of the first axial grooves 26 and the first radial holes 27 have all moved in front of the seal point of the first cup seal 16, a master cylinder pressure is generated in the first hydraulic pressure chamber 14. At the same time, the secondary piston 9 moves forward while compressing both the second interval regulation means 11 and the second return spring 13. Then, the rear ends of the second axial grooves 24 and the second radial holes 25 are all moved in front of the seal point A of the second cup seal 17, and a master cylinder pressure is generated in the second hydraulic pressure chamber 15. The master cylinder pressure generated in the first and second hydraulic pressure chambers 14 and 15 is output from the first and second output ports 28 and 29, respectively, and supplied to the corresponding wheel cylinders of the brake systems as a brake pressure. Then, each wheel cylinder operates the brake of a corresponding brake system.

When the brake operation is released, the primary piston 8 and the secondary piston 9 are retracted by the urging force of the first and second return springs 12 and 13, respectively. Then, the rear ends of the first axial grooves 26 and the first radial holes 27 are all moved to the rear of the seal point of the first cup seal 16, and the rear ends of the second axial grooves 24 and the second radial holes 25 are all moved to the rear of the seal point A of the second cup seal 17. Consequently, the first and second hydraulic pressure chambers 14 and 15 are connected to the first and second fluid supply chambers 18 and 21, respectively. Then, the brake fluid of the first and second hydraulic pressure chambers 14 and 15 is discharged to the reservoir 20 via the first and second axial grooves 26 and 24, the first and second radial holes 27 and 25, the first and second fluid supply cambers 18 and 21, and the fluid passages 19, 22, and 23. As a result, the master cylinder pressure of the first and second hydraulic pressure chambers 14 and 15 drops, thereby reducing braking force of the wheel cylinders. Then, when the first and second interval regulation means 10 and 11 are both extended fully as shown in Fig. 1, the primary piston 8 and the secondary piston 9 reach the retracted limits or the inoperative positions, respectively. In this case, the master cylinder pressure of the first and second hydraulic pressure chambers 14 and 15 is removed, and thus the brake is released.

In the inoperative state of the master cylinder 1 as shown in Fig. 1, when the respective pumps of the first and second brake systems are driven for automatic brake operation or the like, the brake fluid is, in the first brake system, drawn from the reservoir 20 and supplied to a wheel cylinder via the fluid passage 19, the first fluid supply chamber 18, the first axial grooves 26, the first radial holes 27, the first hydraulic pressure chamber 14, and the first output port 28. In addition, in the second brake system, the brake fluid is drawn from the reservoir 20 and supplied to a wheel cylinder via the fluid passages 23 and 22, the second fluid supply chamber 21, the second axial grooves 24, the second radial holes 25, the second hydraulic pressure chamber 15, and the second output port 29. As a result, the brake is operated. In this case, the passage area between the first fluid supply chamber 18 and the first hydraulic pressure chamber 14 is set large by the first axial grooves 26 and the first radial holes 27, and the passage area between the second fluid supply chamber 21 and the second hydraulic pressure chamber 15 is set large by the second axial grooves 24 and the second radial holes 25. Accordingly, a sufficient amount of brake fluid is smoothly supplied to each wheel cylinder, and thus the brake is operated reliably. Note that, it will be readily apparent that this is not only effective for the brake operation of both the first and second brake systems, but effective for the brake operation of either one of the brake systems as well.

According to the master cylinder 1 of the example, the fluid passage connecting the first fluid supply chamber 18 and the first hydraulic pressure chamber 14 is formed by the predetermined number of the first axial grooves 26 and the predetermined number of the first radial holes 27 formed on the outer peripheral surface of the front end of the primary piston 8 formed in a cylindrical shape having the bottom face. In addition, the fluid passage connecting the second fluid supply chamber 21 and the second hydraulic pressure chamber 15 is formed by the predetermined number of the second axial grooves 24 and the predetermined number of the second radial holes 25 formed on the outer peripheral surface of the front end of the secondary piston 9 formed in a cylindrical shape having the bottom face. Accordingly, the passage area for brake fluid can be set large enough when the master cylinder 1 is in the inoperative state. As a consequence, good fluid supply performance and fluid self-support performance of the master cylinder 1 can be ensured, and brake operations by the pump, other than those related to the operation of the master cylinder 1, can be reliably carried out.

Furthermore, since the passage area for brake fluid can be set large enough by the first axial grooves 26 and the first radial holes 27 as well as the second axial grooves 24 and the second radial holes 25, the diameters of the first and second radial holes 27 and 25 can be reduced, thereby enabling shortening of the dead stroke by a corresponding amount.

Moreover, the first and second axial grooves 26 and 24 and the first and second radial holes 27 and 25 are formed at the front ends of the primary piston 8 and the secondary piston 9, respectively. However, since the passage area for brake fluid can be ensured to a reasonable extent by the first and second axial grooves 26 and 24, the passage area for brake fluid ensured by the first and second radial holes 27 and 25 can be made small. Therefore, the number of the first and second radial holes 27 and 25 can be reduced, or the diameters of the first and second radial holes 27 and 25 can be reduced as mentioned earlier. Consequently, even if the predetermined number of the first and second radial holes 27 and 25 are provided, sufficient strength can be ensured for both pistons 8 and 9.

Furthermore, the first and second axial grooves 26 and 24 and the first and second radial holes 27 and 25 are simply formed on the respective front ends of the primary piston 8 and the secondary piston 9. Therefore, the processing of each piston 8 and 9 is easy, thus removing the need for troublesome processing, and other special parts are not required, thus reducing the number of parts compared to the known structures. As a result, the piston can be assembled more easily.

Note that in the above-described example, the invention is applied to both the primary piston 8 and the secondary piston 9, but the invention can be applied to either one of the primary piston 8 and the secondary piston 9. Furthermore, the application of the invention is not limited to a tandem master cylinder, and the invention may also be applied to a single master cylinder having a single piston.

### Industrial Applicability

The master cylinder according to the invention can be used for a master cylinder which is used for a brake system of a vehicle such as an automobile and generates a master cylinder pressure to operate the brake. The master cylinder is particularly suitably used for a master cylinder which takes into account supply performance of supplying brake fluid to a hydraulic pressure chamber from a reservoir at the time of brake release. Furthermore, the master cylinder of the invention is suitably used for a master cylinder which is used for a brake system that is structured such that brake fluid is drawn from the reservoir via the master cylinder by an external power source such as a pump for automatic brake operation or traction control brake operation when the master cylinder is in an inoperative state, and which takes into account self-support performance of drawing the brake fluid toward the hydraulic pressure chamber side of the master cylinder by driving the external power source irrespective of the brake operation.

## Claims

1. A master cylinder comprising at least a cylinder housing, a piston which is fitted slidably in a cylinder hole of the cylinder housing and moves forward by input, a hydraulic pressure chamber formed between the cylinder housing and a front end of the piston in the cylinder hole, a fluid passage which is provided in the piston and connects the hydraulic pressure chamber and a reservoir storing brake fluid, a seal member which is provided in the cylinder housing and opens the fluid passage when the piston is in an inoperative state and blocks the fluid passage when the piston moves forward, **characterized in that**
the fluid passage comprises a predetermined number of axial grooves formed on an outer peripheral surface of the front end of the piston along a circumferential direction so as to be constantly connected to the hydraulic pressure chamber, and a predetermined number of radial holes formed at positions of desire on the axial grooves so as to be constantly connected to the hydraulic pressure chamber.

2. The master cylinder according to claim 1, **characterized in that** the positions of desire are rear ends of the axial grooves.

3. The master cylinder according to claim 1 or 2, **characterized in that** the number of the radial holes is equal to or smaller than the number of the axial grooves.
